# EUROPÄISCHE PATENTSCHRIFT

(11) **EP 1 098 689 B1**
(45) Veröffentlichungstag und Bekanntmachung des Hinweises auf die Patenterteilung: **15.01.2003**
(21) Anmeldenummer: 99938224.5
(22) Anmeldetag: 13.07.1999
(51) Int. Cl.: B01D 35/027, B01D 29/01

(54) **FILTER FÜR FLÜSSIGKEITEN**
FILTER FOR FLUIDS
FILTRE POUR LIQUIDES

(30) Priorität: 16.07.1998 DE 29812483 U
(43) Veröffentlichungstag der Anmeldung: 16.05.2001
(73) Patentinhaber: Filtertek, S.A., F-60128 Plailly (FR)
(72) Erfinder: CHIGA, Antonio, F-77230 Dammartin en Goele (FR)
(74) Vertreter: Brose, D. Karl
(86) Internationale Anmeldenummer: EP9904893
(87) Internationale Veröffentlichungsnummer: WO00003784

(56) Entgegenhaltungen:
- EP-A- 0 400 170
- DE-C- 925 712

## Beschreibung

Die Erfindung betrifft einen Filter für Flüssigkeiten, mit einem aus Kunststoff bestehenden Stützkörper, welcher ein Kunststoffiltergewebe stützt und mit einem auf der Außenseite des Filters angeordneten Pumpenanschlußstutzen, welcher sich mit seinem Unterende im Innenraum des Filters bis nahe zu dessen aus Filtergewebe bestehenden Boden erstreckt, und welcher eine Zulauföffnung aufweist.

Ein derartiges Filter ist als Kraftstoffilter beispielsweise in der DE 39 14 938 C1 beschrieben.

Filter dieser Art zeichnen sich durch eine besonders einfache Bauweise aus und sind als Kraftstoffilter insbesondere für den Einbau in einem Kraftstoff-Vorratsbehälter von Fahrzeugen vorgesehen. Die Filterfunktion wird hierbei von dem Filtergewebe übernommen, wobei der Stützkörper dazu dient, die Oberseite von der Unterseite des durch das Filtergewebe gebildeten Filterkörpers voneinander im Abstand zu halten, da sonst beide Seiten partiell aneinander haften können, was eine Verringerung der zur Verfügung stehenden Filterfläche zur Folge hätte.

Für Filter dieser grundsätzlichen Bauart gibt es die verschiedensten Anwendungsgebiete, wobei als Kraftstoffilter ausgebildete Bauarten meistens nahe einer ebenfalls im Kraftstoff-Vorratsbehälter vorgesehenen Fördereinrichtung insbesondere Förderpumpe angeordnet werden. Zumindest über eine an dem Pumpenanschlußstutzen angeschlossene Saugleitung ist aber das Filter mit der Fördereinrichtung verbunden.

In vielen Spezialfällen besteht dabei das Bedürfnis, eine größtmögliche Filterfläche auf möglichst kleinem Raum zur Verfügung zu stellen. Beispielsweise besteht bei Kraftstoffbehältern das Bedürfnis, derartige Filter in einem möglichst kleinen Saugraum unterbringen zu können, so daß dadurch ein vollständiges Entleeren des Kraftstoffs im Tank möglich wäre. Bei bekannten Filtern ist jedoch wegen der minimal erforderlichen Filterfläche hier eine Grenze gegeben, die bisher nicht unterschritten werden konnte.

Der Erfindung liegt daher die Aufgabe zugrunde, einen Filter der eingangs genannten Art zu schaffen, bei welchem auf engstem Raum eine wesentlich größere Filterfläche vorgesehen werden kann.

Diese Aufgabe wird erfindungsgemäß im wesentlichen dadurch gelöst, daß der Stützkörper aus einem ersten, den Pumpenanschlußstutzen enthaltenden Teil und mindestens einem zweiten Teil besteht, daß der erste Teil mit dem mindestens zweiten Teil beweglich über einen Scharnierbereich verbunden ist, mittels dessen der mindestens zweite Teil gegenüber dem ersten Teil gemeinsam mit dem Filtergewebe aus einer geradlinig gestreckten Ausgangsform der beiden Teile in eine Winkelstellung klappbar ist und daß eine Arretierungsvorrichtung zum Fixieren der Winkelstellung vorgesehen ist. Es ist offensichtlich, daß durch diese Bauweise ein ausgesprochen geringer Raumbedarf für das Filter, trotz großer Filterfläche, erforderlich ist, wobei das Filter dennoch kostengünstig und einfach herstellbar ist.

Bei einer bevorzugten Ausführungsform nach der Erfindung beträgt die durch die Arretierungsvorrichtung fixierbare Winkelstellung zwischen den beiden Teilen 90°. Hierdurch wird eine besonders große Filteroberfläche auf kleinem Raum geschaffen.

Bei einer vorteilhaften Weiterbildung nach der Erfindung ist die Arretierungsvorrichtung außen auf der Oberseite des Filters angeordnet, wobei ferner bevorzugt die Arretierungsvorrichtung aus ineinander eingreifenden Rastmitteln besteht.

Der Einfachheit halber bestehen hierbei bevorzugt die Rastmittel aus einem auf der Oberseite des Filters von dem ersten Teil vorstehenden gabelartigen Bauteil und einem auf der Oberseite des Filters von dem zweiten Teil vorstehenden knopfartigen Bauteil, wobei in der Winkelstellung der Teile des Stützkörpers zwischen den Bauteilen eine formschlüssige und/oder kraftschlüssige Verbindung herstellbar ist.

Im einzelnen ist es ferner bevorzugt, daß der Pumpenanschlußstutzen und die beiden Teile des Stützkörpers, an das die Oberwandung des Filters bildende Filtergewebe angespritzt sind, wobei der erste Teil mit dem zweiten Teil in der gestreckten Ausgangsform nur über das Filtergewebe verbunden ist. Hierdurch wird auf einfachste Weise der gewünschte Scharnierbereich geschaffen, ohne die Funktion des Filters zu stören.

Insbesondere ist es vorteilhaft, daß der erste Teil des Stützkörpers im Scharnierbereich und auch vorzugsweise der zweite Teil des Stützkörpers im Scharnierbereich Stützarme oder -leisten oder dgl. aufweisen, welche in der Winkelstellung das Filtergewebe auf dem Außenradius des Winkels abstützen. Hierdurch wird eine größtmögliche wirksame Oberfläche des Filters gewährleistet.

Bei einer besonders bevorzugten Ausführungsform nach der Erfindung ist das den Boden des Filters bildende Filtergewebe nur über eine den Umfang des Filters teilweise oder vollständig bildende Schweißnaht mit dem die Oberwandung des Filters bildenden Filtergewebe verbunden. Hierdurch wird die Herstellung des erfindungsgemäßen Filters erheblich vereinfacht.

Damit ein problemloses Verschwenken der beiden Teile des Stützkörpers möglich ist, ist es ferner bevorzugt, daß die Außenkontur des Filters zumindest in Richtung der Bewegung der beiden Teile des Stützkörpers zur Herstellung der Winkelbewegung größer ist als der Stützkörper selbst.

Im folgenden wird die Erfindung anhand einer in den Zeichnungen beispielhaft veranschaulichten Ausführungsform näher erläutert. Es zeigt:
**Fig. 1** eine seitliche, teilweise schematische Schnittansicht einer praktischen Ausführungsform des erfindungsgemäßen Filters in der geradlinig gestreckten Ausgangsform.
Fig. 2 das Filter gem. Fig. 1 nach Herstellung und Fixierung der Winkelstellung.
**Fig. 3** eine Draufsicht auf das Filter in der Stellung gem. Fig. 1.
**Fig. 4** eine teilweise Schnittansicht in Richtung des Pfeiles IV in Fig. 2.
**Fig. 5** eine Schnittansicht längs der Linie V-V in Fig. 3 und
**Fig. 6** die in den Figuren 1 bis 5 veranschaulichte Ausführungsform des Filters in natürlicher Größe.

Wie in den Zeichnungen gezeigt, enthält der Filter 1 für Flüssigkeiten, insbesondere Kraftstoffe, einen aus Kunststoff bestehenden Stützkörper 2. Der Stützkörper 2 stützt ein Filtergewebe 4 ab, um zu verhindern, daß das Filter im Betrieb zusammenfällt.

Auf der Außenseite 6 des Filters 1 ist ein Pumpenanschlußstutzen 8 üblicher Bauart angeordnet, welcher sich mit seinem Unterende 10 im Innenraum 12 des Filters 1 bis nahe zu dessen Boden 14 erstreckt, der aus Filtergewebe 4 besteht.

Der Pumpenanschlußstutzen 8 weist eine Zulauföffnung 16 für den gefilterten Kraftstoff auf, welche von einer Anzahl von Stützrippen 17 umgeben ist, so daß die Zulauföffnung 16 in Abstand vom Boden 14 des Filters 1 gehalten ist. Über dem Pumpenanschlußstutzen 8 ist das Filter 1 mit der Saugseite einer nichtgezeigten Kraftstoff-Fördereinrichtung verbunden und bildet mit dieser eine Baueinheit, welche im Inneren eines ebenfalls nicht gezeigten Kraftstoff-Vorratsbehälters eines Kraftfahrzeuges angeordnet ist. Der das Filtergewebe 4 umgebende Kraftstoff gelangt dabei durch dieses in die Zulauföffnung 16, wobei Schmutzpartikel und dgl. durch das Filtergewebe 4 abgesondert werden.

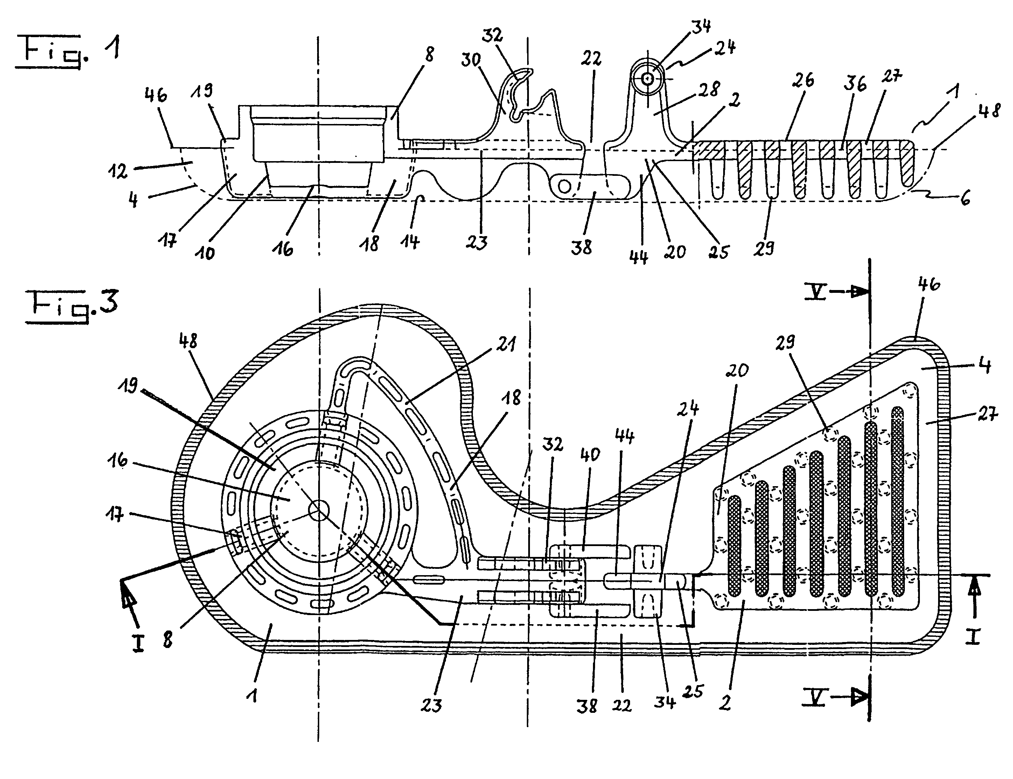

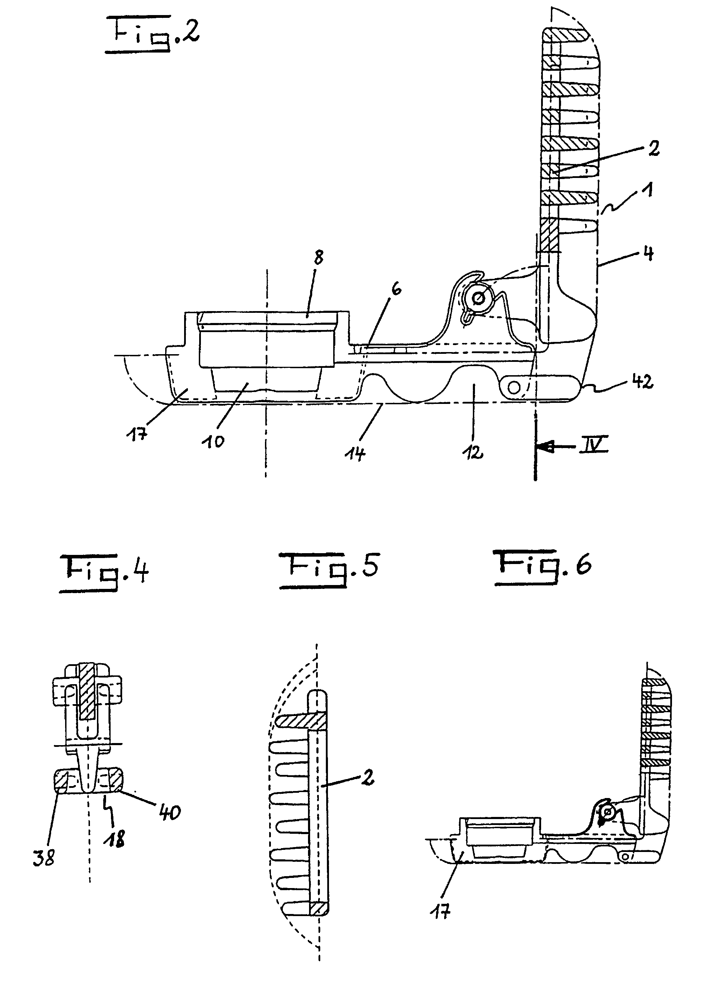

Erfindungsgemäß besteht der Stützkörper 2 aus einem ersten Teil 18, welcher den Pumpenanschlußstutzen 8 enthält und mindestens einem zweiten Teil 20. Der erste Teil 18 ist mit dem mindestens zweiten Teil 20 beweglich über einen Scharnierbereich 22 verbunden, so daß der mindestens zweite Teil 20 gegenüber dem ersten Teil 18 gemeinsam mit dem Filtergewebe 4 aus der in Fig. 1 dargestellten geradlinig gestreckten Ausgangsform der beiden Teile 18 und 20 in eine bevorzugt 90° betragende Winkelstellung klappbar ist, wie diese in Fig. 2 veranschaulicht ist.

Zum Fixieren der in Fig. 2 veranschaulichten Winkelstellung der beiden Teile 18 und 20 des Stützkörpers 2 ist eine allgemein mit 24 bezeichnete Arretierungsvorrichtung vorgesehen.

Wie gezeigt, ist die Arretierungsvorrichtung 24 außen auf der Oberseite 26 des Filters 1 angeordnet und besteht aus ineinander eingreifenden, allgemein mit 28 und 30 bezeichneten Rastmitteln.

Bei dem veranschaulichten Ausführungsbeispiel bestehen die Rastmittel 28 und 30 aus einem auf der Oberseite 26 des Filter 1 vorstehenden gabelartigen Bauteil 32, welcher bevorzugt einstückig mit dem ersten Teil 18 ausgebildet ist. Das Gegenstück zu dem gabelartigen Bauteil 32 bildet ein auf der Oberseite 26 des Filters von dem zweiten Teil 20 vorstehender knopfartiger Bauteil 34, welcher ebenfalls bevorzugt einstükkig mit dem zweiten Teil 20 ausgebildet ist.

In der in Fig. 2 veranschaulichten Winkelstellung der beiden Teile 18 und 20 des Stützkörpers 2 besteht zwischen den Bauteilen 32 und 34 beim Ausführungsbeispiel eine formschlüssige Verbindung, indem der knopfartige Bauteil 34 in den gabelartigen Bauteil 32 eingeschnappt ist. Alternativ läßt sich zu diesem Zwecke selbstverständlich auch eine kraftschlüssige Verbindung verwenden.

Bei dem bevorzugten Ausführungsbeispiel, wie es in den Zeichnungen veranschaulicht ist, sind der Pumpenanschlußstutzen 8 und die beiden Teile 18 und 20 des Stützkörpers 2 an das die Oberwandung 36 des Filters 1 bildende Filtergewebe angespritzt, wobei wie gezeigt, der erste Teil 18 des Stützkörpers 2 mit dem zweiten Teil 20 des Stützkörpers 2 in der gestreckten Ausgangsform gem. Fig. 1 nur über das Filtergewebe 4 verbunden ist. Der erste Teil 18 ist hierbei bevorzugt einstückig mit dem Pumpenanschlußstutzen 8 ausgebildet. Einzelheiten der Art des Herstellungsverfahrens durch Anspritzen sind gem. einem früheren Vorschlag der Anmelderin in der EP 0 400 170 B1 beschrieben.

Der erste Teil 18 des Stützkörpers 2 besteht im wesentlichen aus der den Pumpenanschlußstutzen 8 umgebenden Ringrippe 19 sowie einer Bogenrippe 21, welche die Ringrippe 19 mit einer Strebe 23 verbindet. Die Ringrippe 19, die Bogenrippe 21 und die Strebe 23 sind durch Umspritzen des Filtergewebes 4 gebildet und liegen teilweise außerhalb des Filtergewebes 4 und teilweise im Innenraum 12 des Filters 1. Auf der Unterseite der Teile 19, 21 und 23 sind die Stützrippen 17 einstückig angeformt, während die Oberseite der Strebe 23 den gabelförmigen Bauteil 32 einstückig trägt.

Der ebenfalls einstückig ausgebildete zweite Teil 20 besteht aus einer Strebe 25, die ebenfalls durch Umspritzen des Filtergewebes 4 geformt wurde und auch ihrer außerhalb des Filtermaterials liegenden Seite den knopfartigen Bauteil 34 trägt. Die Strebe 25 geht einstückig in einen, im wesentlichen gitterförmigen Bauteil über, welcher ebenfalls durch Umspritzen des Filtergewebes 4 gebildet ist. Auf der Unterseite des gitterförmigen Bauteils 27 sind eine Anzahl von noppenförmigen Stützfüßen 29 einstückig angeformt, welche sich auf den Boden 14 des Innenraumes 12 des Filters 1 abstützen und somit den Boden 14 im Abstand von der Oberseite 26 des Filters 1 halten. Durch den gitterförmigen Bauteil 27 wird ein vergleichsweise stabiles Gebilde geformt, welches das Hochschwenken und Einrasten des zweiten Teiles 20 in den ersten Teil 18 erleichtert.

Bei dem in den Zeichnungen veranschaulichten bevorzugten Ausführungsbeispiel sind an dem ersten Teil 18 des Stützkörpers 2 und an dem zweiten Teil 20 des Stützkörpers 2 jeweils im Scharnierbereich Stützarme oder Leisten 38, 40 bzw. 44 einstückig an den beiden Teilen 18 und 20 angeformt. Diese Stützarme oder -leisten 38, 40 bzw. 44 dienen dazu, wie sich insbesondere aus der Ansicht gem. Fig. 2 ergibt, das Filtergewebe 4 auf dem Außenradius 42 des abgewinkelten Filters 1 abzustützen, so daß hier ebenfalls die wirksame Filterfläche erhalten bleibt.

Wie sich aus der Ansicht gem. Fig. 1 bis 3 ergibt, ist das den Boden 14 des Filters 1 bildende Filtergewebe 4 nur über eine den Umfang des Filters 1 vollständig oder teilweise bildende Schweißnaht 46 mit der die Oberwandung 36 des Filters bildenden Filtergewebe 4 verbunden.

Um ferner das Abwinkeln des Filters 1 aus der Lage gem. Fig. 1 in die Lage gem. Fig. 2 nicht zu behindern, ist die Außenkontur 48 des Filters 1 mindestens in Richtung der Klappbewegung der Teile 18 und 20 des Stützkörpers 2 größer als die Längenerstreckung des Stützkörpers in dieser Richtung.

Ein wesentliches Merkmal der vorliegenden Erfindung bildet die einfache Art und Weise, wie sich das vergleichsweise komplex wirkende Filter 1 herstellen läßt. Zunächst werden der Pumpenanschlußstutzen 8 mit den Teilen 18 und 20 des Stützkörpers 2 sowie sämtlichen nicht näher erläuterten Stützrippen und Noppen an ein Band aus Filtergewebe 4 angespritzt, welches durch ein Spritzgießwerkzeug gezogen wurde. Danach wird eine zweite Lage des Filtergewebes 4 als Boden 14 des Filters 1 an der Schweißnaht 46 angeschweißt, um so den gewünschten Filterraum zu erhalten, welcher vorher von losen Partikeln durch Absaugen befreit wurde. Danach wird die Außenkontur 48 des Filters ausgestanzt, wie sie beispielhaft in Fig. 3 veranschaulicht ist. Nachdem somit das Filter 1 in der gestreckten Ausgangslage gem. Fig. 1 hergestellt ist, wird lediglich der zweite Teil 20 des Stützkörpers 2 nach oben um 90° verschwenkt und der knopfartige Bauteil 34 in den gabelartigen Bauteil 32 eingerastet.

Es ist offensichtlich, daß trotz der komplex wirkenden Form eine ausgesprochen einfache Herstellung des Filters möglich ist.

Es wurde obenstehend eine beispielhafte Ausführungsform des erfindungsgemäßen Filters beschrieben, bei welcher der Stützkörper 2 aus zwei gegeneinander in einem Scharnierbereich verschwenkbaren und einrastbaren Teilen 18 und 20 besteht. Selbstverständlich sind durch den Grundgedanken vorliegender Erfindung auch Ausführungsformen umfaßt, bei welcher mehr als ein zweiter Teil 20 vorgesehen ist, welcher gegenüber dem ersten Teil 18 verschwenkbar und einrastbar ausgebildet ist, so daß sich auf diese Art die Filterfläche nahezu beliebig vergrößern läßt und viele verschiedene Formen von Filtern geschaffen werden können, bei denen ausgehend von der gestreckten Lage, welche die Herstellung erleichtert, eine Betriebsstellung möglich ist, in welcher mehrere zweite Teile 20 gegenüber dem den Pumpenanschlußstutzen 8 tragenden ersten Teil 18 nach oben verschwenkt und verrastet sind.

Sämtliche aus der Beschreibung, den Ansprüchen und Zeichnungen hervorgehenden Merkmale und Vorteile der Erfindung, einschließlich konstruktiver Einzelheiten und räumlicher Anordnungen, können sowohl für sich als auch in beiliegender Kombination erfindungswesentlich sein.

## Patentansprüche

1. Filter für Flüssigkeiten mit einem aus Kunststoff bestehenden Stützkörper, welcher ein Kunststoffiltergewebe stützt und dazu dient, die Oberseite von der Unterseite des durch das Filtergewebe gebildeten Pilterkörpers voneinander im Abstand zu halten, und mit einem auf der Außenseite des Filters angeordneten Pumpenanschlußstutzen, welcher sich mit seinem Unterende im Innenraum des Filters bis nahe zu dessen aus Filtergewebe bestehenden Boden erstreckt, und eine Zulauföffnung aufweist, wobei der Stützkörper vollständig mit Filtermaterial umschlossen ist, wodurch sich ein geschlossener Innenraum bildet, der lediglich durch den Pumpenanschlußstutzen durchbrochen wird und wobei das den Boden des Filterkörpers bildende Filtergewebe mit dem die Oberwandung bildenden Filtergewebe verbunden ist, **dadurch gekennzeichnet, daß** der Stützkörper (2) aus einem ersten, den Pumpenanschlußstutzen (8) enthaltenden Teil (18) und mindestens einem zweiten Teil (20) besteht, daß der erste Teil (18) mit dem mindestens zweiten Teil (20) beweglich über einen Scharnierbereich (22) verbunden ist, mittels dessen der mindestens zweite Teil (20) gegenüber dem ersten Teil (18) gemeinsam mit dem Filtergewebe (4) aus einer geradlinig gestreckten Ausgangsform der beiden Teile in eine Winkelstellung klappbar ist, und daß eine Arretierungsvorrichtung (24) zum Fixieren der Winkelstellung vorgesehen ist.

2. Filter nach Anspruch 1, **dadurch gekennzeichnet, daß** die durch die Arretierungsvorrichtung (24) fixierbare Winkelstellung zwischen den beiden Teilen (18, 20) 90° beträgt.

3. Filter nach Anspruch 1 oder 2, **dadurch gekennzeichnet, daß** die Arretierungsvorrichtung (24) außen auf der Oberseite 26 des Filters 1 angeordnet ist.

4. Filter nach einem der vorstehenden Ansprüche, **dadurch gekennzeichnet, daß** die Arretierungsvorrichtung (24) aus ineinander eingreifenden Rastmitteln (28, 30) besteht.

5. Filter nach Anspruch 4, **dadurch gekennzeichnet, daß** die Rastmittel (28, 30) aus einem auf der Oberseite (26) des Filters von dem ersten Teil (18) vorstehenden gabelartigen Bauteil (32) und einem auf der Oberseite (26) des Filters (1) von dem zweiten Teil (20) vorstehenden knopfartigen Bauteil (34) besteht, wobei in der Winkelstellung der Teil (18, 20) zwischen den Bauteilen (32, 34) eine formschlüssige und/oder kraftschlüssige Verbindung herstellbar ist.

6. Filter nach einem der vorstehenden Ansprüche, **dadurch gekennzeichnet, daß** der Pumpenanschlußstutzen (8) und die beiden Teile (18, 20) des Stützkörpers an das die Oberwandung (36) des Filters (1) bildende Filtergewebe (34) angespritzt sind, wobei der erste Teil (18) mit dem zweiten Teil (20)in der gestreckten Ausführungsform nur über das Filtergewebe (4) verbunden ist.

7. Filter nach einem der vorstehenden Ansprüche, **dadurch gekennzeichnet, daß** der erste Teil (18) des Stützkörpers (2) im Scharnierbereich (22) Stützarme oder -leisten (38, 40) o. dgl. aufweist, welche in der Winkelstellung das Filtergewebe (4) auf dem Außenradius des Winkels abstützen.

8. Filter nach einem der vorstehenden Ansprüche, **dadurch gekennzeichnet, daß** der zweite Teil (20) des Stützkörpers (2) im Scharnierbereich (22) Stützarme oder -leisten (44) o. dgl. aufweist, welche in der Winkelstellung das Filtergewebe auf dem Außenradius (42) des Winkels abstützen.

9. Filter nach einem der vorstehenden Ansprüche, **dadurch gekennzeichnet, daß** das den Boden (14) des Filters (1) bildende Filtergewebe (4) nur über eine den Umfang des Filters (1) teilweise oder vollständig bildende Schweißnaht mit dem die Oberwandung (36) des Filters (1) bildenden Filtergewebe (4) verbunden ist.

10. Filter nach einem der vorstehenden Ansprüche, **dadurch gekennzeichnet, daß** die Außenkontur (48) des Filters (1) zumindest in Richtung der Bewegung der beiden Teile (18, 20) des Stützkörpers (2) bei der Herstellung der Winkelbewegung größer als der Stützkörper (2) ist.

## Claims

1. Filter for liquids having a supporting body, consisting of plastics supporting a plastics filter cloth and which is serving to keep the top side and the bottom side of the filter body formed by the filter cloth in a distance apart from each other, having a pump connection socket positioned on the exterior of the filter which with its bottom end is extending into the interior of the filter close to the bottom thereof consisting of filter cloth and having an inlet opening, wherein the supporting body is completely enclosed in the filter material whereby a closed interiour cavity is formed, which merely is penetrated by the pump connection socket and wherein the filter cloth forming the bottom of the filter body is connected with the filter cloth forming the top wall thereof, **characterised in that** the supporting body (2) is consisting of a first part (18) containing the pump connection socket (8) and further at least a second part (20), **in that** the first part (18) and the second part (20) are movably connected with each other by means of a hinge section (22) by the means of which the at least a second part (20) with respect to the first part (18) and together with the filter cloth (4) can be folded from a linearely extended starting shape of the two parts into an angular position and **in that** a locking device (24) is provided for fixing the angular position.

2. Filter according to claim 1, **characterised in that** by means of the locking device (24) the angular position between the two parts (18, 20) is 90 degrees.

3. Filter according to claim 1 or 2, **characterised in that** the locking device (24) is provided on the exterior on the top side (26) of the filter (1).

4. Filter according to any of the preceding claims, **characterised in that** the locking device (24) is consisting of interengaging locking means (28, 30).

5. Filter according to claim 4, **characterised in that** the locking means (28, 30) are consisting of a forkshaped member (32) projecting from the first part (18) on the top side (26) of the filter and of a button shaped member (34) projecting from the second part (20) on the top side (26) of the filter (1) wherein in the angular position of the parts (18, 20) a formfit and/or a nonpositive connection can be made between the members (32, 34).

6. Filter according to any of the preceding claims, **characterised in that** the pump connection socket (8) and the two parts (18, 20) of the supporting body are injection moulded onto the filter cloth (4) forming the top wall (36) of the filter (1) wherein the first part (18) in the linearely extended shape is connected with the second part (20) only by the filter cloth (4)

7. Filter according to any of the preceding claims, **characterised in that** the first part (18) of the supporting body (2) in the hinge area (22) is having supporting arms or -ridges (38, 40) or the like which in the angular position are supporting the filter cloth (4) on the exterior radius of the angle.

8. Filter according to any of the preceding claims, **characterised in that** the second part (20) of the supporting body (2) is having supporting arms or -ridges (44) or the like, in the hinge section (22) which in the angular position are supporting the filter cloth on the exterior radius (42) of the angle.

9. Filter according to any of the preceding claims, **characterised in that** the filter cloth (4) forming the bottom (14) of the filter (1) is connected with the filter cloth (4) forming the top wall (36) of the filter (1) only by means of a welded seam forming the circumference of the filter (1) partly or completely.

10. Filter according to any of the preceding claims, **characterised in that** the exterior contour (48) of the filter (1) is larger than the supporting body (2) at least in the direction of the movement of the two parts (18, 20) of the supporting body (2) when establishing the angular position.

## Revendications

1. Filtre pour liquides comprenant un corps support réalisé en matière plastique, qui supporte un tissu filtrant en matière plastique et sert à maintenir à distance l'une de l'autre la face supérieure et la face inférieure du corps du filtre formé par le tissu filtrant, et une tubulure de raccordement de la pompe qui est disposée du côté extérieur du filtre, s'étend avec son extrémité inférieure dans l'espace intérieur du filtre jusqu'à proximité du fond de celui- ci réalisé en tissu filtrant et présente un orifice d'arrivée, le corps support étant entièrement entouré par le matériau filtrant, un espace intérieur fermé étant ainsi formé, lequel est interrompu uniquement par la tubulure de raccordement de la pompe, et le tissu filtrant formant le fond du corps du filtre étant relié avec le tissu filtrant formant la paroi supérieure, **caractérisé en ce que** le corps support (2) est constitué par une première partie (18) contenant la tubulure de raccordement de la pompe (8) et une deuxième partie (20) au moins, **en ce que** la première partie (18) est reliée avec la deuxième partie (20) au moins de façon mobile par l'intermédiaire d'une zone charnière (22) au moyen de laquelle la au moins une deuxième partie (20), avec le tissu filtrant (4), peut être rabattue par rapport à la première partie (18), à partir d'une forme initiale des deux parties s'étendant de façon rectiligne, pour prendre une position angulaire et **en ce qu'**un dispositif d'arrêt (24) est prévu pour fixer la position angulaire.

2. Filtre selon la revendication 1, **caractérisé en ce que** la position angulaire entre les deux parties (18, 20) pouvant être fixée par le dispositif d'arrêt (24) est de 90°.

3. Filtre selon la revendication 1 ou 2, **caractérisé en ce que** le dispositif d'arrêt (24) est disposé à l'extérieur sur la face supérieure (26) du filtre (1).

4. Filtre selon l'une quelconque des revendications précédentes, **caractérisé en ce que** le dispositif d'arrêt (24) est constitué par des moyens de blocage (28, 30) venant en prise l'un dans l'autre.

5. Filtre selon la revendication 4, **caractérisé en ce que** les moyens de blocage (28, 30) comprennent une pièce en forme de fourche (32) dépassant de la première partie (18) sur la face supérieure (26) du filtre (1) et une pièce en forme de bouton (34) dépassant de la deuxième partie (20) sur la face supérieure (26) du filtre (1), lesdites pièces (32, 34) pouvant être reliées de manière solidaire avec correspondance de forme et/ou par une liaison dynamique dans la position angulaire des parties (18, 20).

6. Filtre selon l'une quelconque des revendications précédentes, **caractérisé en ce que** la tubulure de raccordement de la pompe (8) et les deux parties (18, 20) du corps support sont moulées par injection et appliquées sur le tissu filtrant (34) formant la paroi supérieure (36) du filtre (1), la première partie (18) n'étant reliée à la deuxième partie (20) dans la forme de réalisation rectiligne que par l'intermédiaire du tissu filtrant (4).

7. Filtre selon l'une quelconque des revendications précédentes, **caractérisé en ce que** la première partie (18) du corps support (2) présente, dans la zone charnière (22), des bras ou des barrettes supports (38, 40) ou similaires qui, dans la position angulaire supportent le tissu filtrant (4) sur le rayon extérieur de l'angle.

8. Filtre selon l'une quelconque des revendications précédentes, **caractérisé en ce que** la deuxième partie (20) du corps support (2) présente, dans la zone charnière (22), des bras ou des barrettes supports (44) ou similaires qui, dans la position angulaire, supportent le tissu filtrant sur le rayon extérieur (42) de l'angle.

9. Filtre selon l'une quelconque des revendications précédentes, **caractérisé en ce que** le tissu filtrant (4) formant le fond (14) du filtre (1) n'est relié au tissu filtrant (4) formant la paroi supérieure (36) du filtre (1) que par l'intermédiaire d'une soudure formant partiellement ou totalement le pourtour du filtre (1).

10. Filtre selon l'une quelconque des revendications précédentes, **caractérisé en ce que** le contour extérieur (48) du filtre (1) est plus grand que le corps support (2), au moins dans la direction du mouvement des deux parties (18, 20) du corps support (2) lors de l'exécution du mouvement angulaire.
